# EUROPEAN PATENT SPECIFICATION

(11) **EP 2 504 222 B1**
(45) Date of publication and mention of the grant of the patent: **20.04.2016**
(21) Application number: 10833660.3
(22) Date of filing: 16.11.2010
(51) Int. Cl.: B62D 35/00

(54) **DEVICE FOR HEIGHT SETTING OF AN AIR DEFLECTOR, AND AIR DEFLECTOR PROVIDED WITH SUCH DEVICE**
VORRICHTUNG ZUR HÖHENEINSTELLUNG EINES LUFTABLENKERS UND MIT EINER SOLCHEN VORRICHTUNG AUSGESTATTETER LUFTABLENKER
DISPOSITIF PERMETTANT DE RÉGLER EN HAUTEUR UN DÉFLECTEUR D'AIR ET DÉFLECTEUR D'AIR POURVU DE CE DISPOSITIF

(30) Priority: 26.11.2009 SE 0950902
(43) Date of publication of application: 03.10.2012
(73) Proprietor: Scania CV AB, 151 87 Södertälje (SE)
(72) Inventor: PERNÅ, Mattias, SE-647 31 Mariefred (SE); RYHÄNEN, Simo, SE-151 39 Södertälje (SE)
(74) Representative: Scania CV AB
(86) International application number: PCT/SE2010/051258
(87) International publication number: WO 2011/065894

(56) References cited:
- EP-A2- 1 055 589
- DE-U1- 8 622 434
- FR-A1- 2 713 581
- FR-A1- 2 816 906
- GB-A- 2 139 165
- GB-A- 2 204 007
- US-A- 4 401 339
- US-A1- 2008 093 886
- US-A1- 2008 093 886

## Description

### TECHNICAL FIELD

The invention relates to a device for height setting of an air deflector comprising a shield adapted to being pivotable about a forward horizontal spindle associated with a vehicle roof. The invention relates also to an air deflector provided with such device.

### BACKGROUND

A known device of this kind (DE 3626006 A1) comprises an actuator intended for height setting and capable of being remote-operated from inside the vehicle's cab. However, for such an actuator to work in practice, it needs electronic control means which generally have a relatively short service life of typically about seven years in the exposed outdoor environment on top of the cab.

### SUMMARY OF THE INVENTION

An object of the invention is therefore to propose a robust device of the kind indicated in the introduction which is easy to adjust manually.

This is achieved by the features indicated in the claims set out below.

According to a version of the invention, the device has:
a spring which endeavours to pivot the shield about the spindle in an upward direction from the roof;
an elongate pull means connected to the shield for manual height setting of the shield against the action of the spring; and
a locking mechanism, acting between the pull means and the shield and operable by pulling force applied to the pull means, to lock the shield in a relevant height position upon removal of force from the pull means, and to release the shield, enabling it to move to a different height position, upon application of pulling force to the pull means.

Owing to the spring acting in the upward direction, the user need only overcome the spring force in one direction when setting the shield. The fact that the pulling force is used both to operate the locking mechanism and to move the shield means that the user need not necessarily use separate operating means for these functions.

In an embodiment of the invention, the locking mechanism is resettable by a smaller pulling force applied to the pull means than a pulling force exerted on the pull means by the spring. In this case the user can apply a smaller pulling force to the pull means to release the shield against the action of the locking mechanism, and apply a larger pulling force to move the shield against or along the direction of the force exerted by the spring. To lock the locking mechanism in the relevant height position, it may be sufficient for the user to remove force from the pull means so quickly that the locking mechanism can, e.g. by smaller inertia force, lock the locking mechanism before the spring can raise the shield to any appreciable extent.

Although the pull means may be a rigid pull means, in an embodiment it is a flexible pull means, e.g. a steel line. Such a pull means may be of low weight and occupy little space. In this case it may also be possible for the line to be kept constantly taut by a winding device.

The spring may comprise at least one gas spring. Such well-proven springs have been developed over a long period and can with relatively small dimensions exert the large forces which may be necessary to overcome the force of gravity from the shield.

The gas spring may also be a lockable gas spring. Such a gas spring may have an integral locking device of conventional type with an operating means which can be acted upon by force from outside and which may form part of the locking mechanism according to the invention. Building such a device into the cylinder of the gas spring will protect it against the exposed outdoor environment on top of the vehicle cab.

In this case the pull means may also be connected to the shield by a force reducing arrangement with split rollers. This makes it possible to use a spring with such strong spring force that the locking mechanism need have locking action in only an upward direction. The locking mechanism may then comprise only one single-acting latch such as a latch with "drawer" effect or a line latch such as a sheet clip.

The locking mechanism may further comprise a lever arm which is adapted to acting upon an operating means of the locking mechanism and which has a first end pivotably connected to the shield and a second end connected to the pull means. This is a simple way of achieving the device's aforesaid two functions of operating the locking mechanism and moving the shield.

Although it may comprise only one element, in an embodiment the pull means may also comprise a first pull element for operating the locking mechanism and a second pull element for moving the shield. This makes it possible to use a transverse handle which has its one end connected to the first pull element and its other end connected to the second pull element, in order both to operate the locking mechanism and to move the shield by raising and lowering one end or the other.

Other features and advantages of the invention may be indicated by the claims and the description of embodiment examples set out below.

### BRIEF DESCRIPTION OF DRAWINGS

FIG. 1 is a schematic side view, partly in section and with portions cut away, of an air deflector on a vehicle roof with a device according to the invention;
FIGS. 2A, 2B are perspective views, with portions cut away, of another embodiment of a device according to the invention in locked and released positions respectively;
FIG. 3 is a side view, with portions cut away, of a further embodiment of a device according to the invention; and
FIG. 4 is a side view, with portions cut away, of yet another embodiment of a device according to the invention.

### DETAILED DESCRIPTION OF EMBODIMENT EXAMPLES

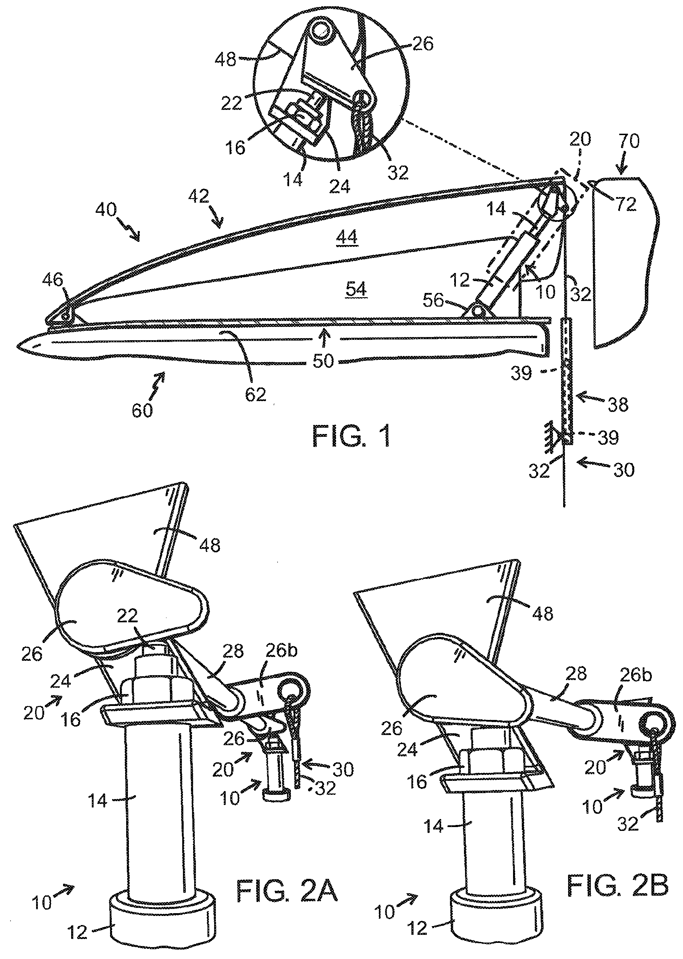

The air deflector 40 in FIG. 1 is mounted in a manner not depicted in detail on a roof 62 of a tractor vehicle 60. In this embodiment example, the air deflector 40 comprises a shield 42 pivotably connected to a body 50 via a forward spindle 46. The shield 42 and the body 50 may be provided with respective opposite sidewalls 44 and 54 which overlap one another.

Between the shield 42 and the body 50 there is at least one spring 10 which endeavours to pivot the shield 42 in an upward direction from the roof 62. There is also a device for locking the shield 42 in a desired height position so that a rear edge of the shield 42 is level with an upper front edge 72 of a trailer vehicle 70.

Although other springs are conceivable, the spring in the embodiment example depicted is a linear thrust gas spring 10 comprising a pressurised cylinder 12 and a piston rod 14. FIG. 1 depicts the gas spring 10 by way of example as sloping somewhat rearwards, but it may of course also be more vertical as depicted in FIGS. 2A and B. The gas spring 10 is also of a known lockable type comprising an operating means 22 which forms part of a locking mechanism 20 and which, when acted upon in a manner not depicted in detail, releases a locking engagement between the cylinder 12 and the piston rod 14. The operating means 22 depicted takes the form of an axially directed push-button at the free end of the piston rod 14 and is preloaded by spring force towards a protruding locking position.

The spring 10 has its lower end articulatedly connected to the body 50 by a body bracket 56, and its upper end articulatedly connected to the shield 42 by a shield bracket 48 via a retainer 24. More specifically, the retainer 24 has its lower end fastened to the piston rod 14 by a threaded connection with a nut 16, and its upper end supported pivotably at the shield bracket 48.

A lever arm 26 which forms part of the locking mechanism 20 and is adapted to engaging with the operating means 22 is also supported pivotably at the shield bracket 48. In the examples depicted in FIGS. 1-3, the free end of the lever arm 26 is connected to a pull means 30 in the form of a pull line 32. When pulling force is applied to the pull line 32, the lever 26 can push in the operating means 22 and release the locking engagement between the cylinder 12 and the piston rod 14 so that the shield 42 can assume a different height position.

If the shield 42 needs to be lowered, this can be achieved by the user applying a larger pulling force to the pull line 32 so that the spring 10 is compressed to a desired extent. To lock the shield 42 in the new lower position, the user may remove the pulling force quickly so that the locking mechanism 20 reverts to the locked state before the spring 10 can overcome the greater inertia force from the heavier shield 42.

If the shield 42 needs to be raised, this can be achieved by the user applying, when the operating means 22 is already pushed in, a slightly smaller pulling force to the pull line 32 so that the spring 10 expands to a desired extent. To lock the shield 42 in the new higher position, the user may, as in the above case, remove the pulling force quickly so that the locking mechanism 20 reverts to the locked state before the spring 10 can overcome the greater inertia force from the heavier shield 42.

In case the quick release may not be sufficient to lock the shield 42 in the desired position, the gas spring 10 may be provided with a delaying damping function similar to that of gas springs of office chairs. A further possibility may be to use a rigid pull means (not depicted) which by upward movement can quickly and positively return the locking mechanism 20 to the locked state.

If the spring or springs 10 has/have a large compressive force, it is possible, as schematically depicted in FIG. 1, for the pulling force required to set the shield 42 to be reduced by providing a flexible pull means 30 with a force reducing arrangement 38 comprising one or more split rollers or snatch blocks 39. One end of the arrangement 38 may, as illustrated, be firmly connected to the tractor unit 60.

The flexible pull line 30 may also be provided with an undepicted winding device which takes up the slack in the line when it is not being used. Such a device may comprise a line take-up box with a spindle acted upon by a coil spring which endeavours to wind the line onto the spindle in order to keep it constantly taut.

If the shield is acted upon by two compression springs 10, there may be a locking mechanism 20 for each spring 10, as illustrated in FIGS. 2A, B. The locking mechanisms 20 may then be acted upon jointly by the pull means 30 via a separate lever arm 26B connected to the respective lever arms 26 by a common transverse spindle 28.

There may also be other possible ways of acting jointly upon the two locking mechanisms 20. One possibility is a joint pull line which divides to form a Y shape in order to extend to both of the locking mechanisms 20 (not depicted).

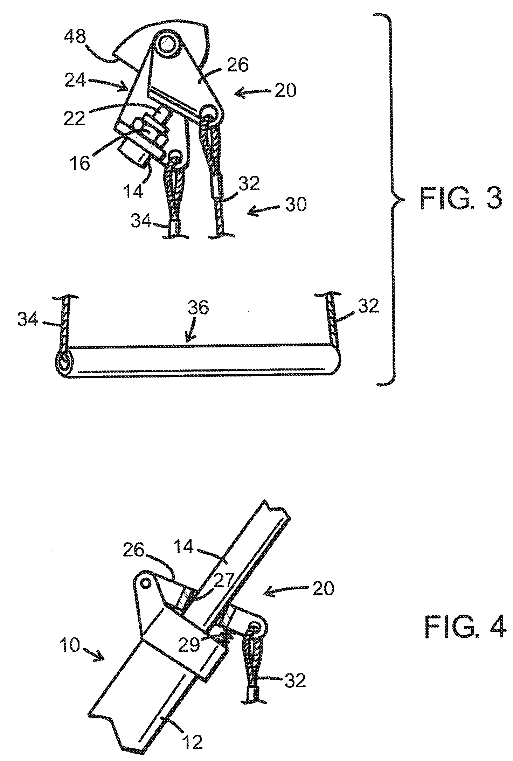

An alternative possibility for effecting height setting for a compression spring is illustrated in FIG. 3. In this case the pull means 30 is divided into two pull elements, viz. an element 32 for operating the locking mechanism 20 and an element 34 for raising and lowering the shield. As depicted, the elements 32, 34 may take the form of continuous cords and extend through an elongate handle 36 which is operable with two hands, whereby the locking mechanism 20 can be controlled separately during height setting by raising and lowering the end of the handle which is adjacent to the cord which constitutes the pull element 32.

Finally, Fig. 4 depicts schematically the possibility of the locking mechanism 20 being so configured that the lever arm 26 is articulatedly connected to an upper end of the cylinder 12 of the compression spring 10 and locks the piston rod 14 in only an upward direction by firm wedging in a straight-through recess 27 with "drawer" effect. A spring 29 may preload the lever arm 26 in the locking upward direction. The pressure force of the compression spring 10 may then be so great as to be sufficient to hold against the shield in the downward direction. One pull element 32 is used, as in the above examples, to operate the locking function, whereas the other (not depicted) is used for raising and lowering the shield.

The description set out above is primarily intended to facilitate comprehension and no unnecessary limitations of the invention are to be inferred from it. The modifications which will be obvious to one skilled in the art from perusing the description may be effected without deviating from the concept of the invention or the scope of the claims set out below.

## Claims

1. A device for height setting of an air deflector (40) comprising a shield (42) adapted to being pivotable about a forward horizontal spindle (46) associated with a vehicle roof (62) of a tractor vehicle;
**characterised by**
a spring (10) which endeavours to pivot the shield (42) about the spindle (46) in an upward direction from the roof (62);
an elongate pull means (30) connected to the shield (42) for manual height setting of the shield against the action of the spring (10); and
a locking mechanism (20), acting between the pull means (30) and the shield (42) and operable by pulling force applied to the pull means (30), to lock the shield (42) in a relevant height position upon removal of force from the pull means (30), and to release the shield, enabling it to move to a different height position, upon application of pulling force to the pull means (30).

2. A device according to claim 1, in which the locking mechanism (20) is resettable by a smaller pulling force applied to the pull means than a pulling force exerted on the pull means (30) by the spring (10).

3. A device according to claim 1, in which the pull means is a flexible pull means (30).

4. A device according to claim 3, in which the pull means (30) is connected to the shield via a force reducing arrangement (38) comprising split rollers (39).

5. A device according to any one of the foregoing claims, in which the spring comprises at least one gas spring (10).

6. A device according to any one of the foregoing claims, in which the locking mechanism (20) comprises a lockable gas spring (10).

7. A device according to any one of the foregoing claims, in which the locking mechanism (20) comprises a lever arm (26) adapted to acting upon an operating means (22) of the locking mechanism, which lever arm (26) has a first end connected pivotably to the shield (42) and a second end connected to the pull means (30).

8. A device according to any one of the foregoing claims, in which the pull means (30) comprises a first pull element (32) for locking and releasing the shield and a second pull element (34) for moving the shield (42).

9. An air deflector (40) provided with a device according to any one of the foregoing claims.

## Patentansprüche

1. Vorrichtung zum Höheneinstellen eines Luftabweisers (40), die ein Schild (42) umfasst, das schwenkbar um eine vordere horizontale Welle (46) ausgebildet ist, die mit einem Fahrzeugdach (62) eines Zugfahrzeugs verbunden ist;
**gekennzeichnet durch**
eine Feder (10), die bestrebt ist, das Schild (42) um die Welle (46) in einer Aufwärtsrichtung von dem Dach (62) aus zu schwenken;
ein mit dem Schild (42) verbundenes längliches Zugmittel (30) zum manuellen Höheneinstellen des Schildes entgegen dem Wirken der Feder (10); und
einen Verriegelungsmechanismus (20), der zwischen dem Zugmittel (30) und dem Schild (42) wirkt und **durch** eine auf das Zugmittel (30) aufgebrachte Zugkraft betreibbar ist, um das Schild (42) bei einem Entfernen der Kraft von dem Zugmittel (30) in einer relevanten Höhenposition zu verriegeln, und um das Schild bei einem Aufbringen einer Zugkraft auf das Zugmittel (30) zu lösen, um diesem ein Bewegen zu einer anderen Höhenposition zu ermöglichen.

2. Vorrichtung nach Anspruch 1, bei der der Verriegelungsmechanismus (20) rückstellbar ist durch eine auf das Zugmittel aufgebrachte kleinere Zugkraft als eine durch die Feder (10) auf das Zugmittel (30) ausgeübte Zugkraft.

3. Vorrichtung nach Anspruch 1, bei der das Zugmittel ein flexibles Zugmittel (30) ist.

4. Vorrichtung nach Anspruch 3, bei der das Zugmittel (30) mittels einer Kraftreduktionsanordnung (38) mit dem Schild verbunden ist, die geteilte Rollen (39) umfasst.

5. Vorrichtung nach einem der vorangehenden Ansprüche, bei der die Feder wenigstens eine Gasfeder (10) umfasst.

6. Vorrichtung nach einem der vorangehenden Ansprüche, bei der der Verriegelungsmechanismus (20) eine verriegelbare Gasfeder (10) umfasst.

7. Vorrichtung nach einem der vorangehenden Ansprüche, bei der der Verriegelungsmechanismus (20) einen Hebelarm (26) umfasst, der dazu ausgebildet ist, auf ein Betriebsmittel (22) des Verriegelungsmechanismus einzuwirken, wobei der Hebelarm (26) ein schwenkbar mit dem Schild (42) verbundenes erstes Ende und ein mit dem Zugmittel (30) verbundenes zweites Ende aufweist.

8. Vorrichtung nach einem der vorangehenden Ansprüche, bei der das Zugmittel (30) eine erste Zugkomponente (32) zum Verriegeln und Lösen des Schildes und eine zweite Zugkomponente (34) zum Bewegen des Schildes (42) umfasst.

9. Luftabweiser (40), der mit einer Vorrichtung nach einem der vorangehenden Ansprüche versehen ist.

## Revendications

1. Dispositif pour le réglage de hauteur d'un déflecteur d'air (40) comprenant un bouclier (42) adapté de façon à pouvoir pivoter autour d'un axe horizontal avant (46) associé à un toit de véhicule (62) d'un véhicule tracteur ;
**caractérisé par** :
un ressort (10) qui tend à faire pivoter le bouclier (42) autour de l'axe (46) dans une direction vers le haut à partir du toit (62) ;
un moyende traction allongé (30) relié au bouclier (42) pour un réglage de hauteur manuel du bouclier à l'encontre du ressort (10) ; et
un mécanisme de verrouillage (20), agissant entre le moyen de traction (30) et le bouclier (42), et pouvant être actionné par une force de traction appliquée au moyen de traction (30), de façon à verrouiller le bouclier (42) dans une position de hauteur pertinente lors de l'élimination d'une force à partir du moyen de traction (30), et à relâcher le bouclier, lui permettant de se déplacer vers une position de hauteur différente, lors de l'application d'une force de traction au moyen de traction (30).

2. Dispositif selon la revendication 1, dans lequel le mécanisme de verrouillage (20) peut être remis à l'état initial par une force de traction, appliquée au moyen de traction, inférieure à une force de traction exercée sur le moyen de traction (30) par le ressort (10).

3. Dispositif selon la revendication 1, dans lequel le moyen de traction est un moyen de traction souple (30).

4. Dispositif selon la revendication 3, dans lequel le moyen de traction (30) est relié au bouclier par l'intermédiaire d'un dispositif de réduction de force (38) comprenant des rouleaux fendus (39).

5. Dispositif selon l'une quelconque des revendications précédentes, dans lequel le ressort comprend au moins un ressort à gaz (10).

6. Dispositif selon l'une quelconque des revendications précédentes, dans lequel le mécanisme de verrouillage (20) comprend un ressort à gaz pouvant être verrouillé (10).

7. Dispositif selon l'une quelconque des revendications précédentes, dans lequel le mécanisme de verrouillage (20) comprend un bras de levier (26) adapté de façon à agir sur des moyens d'actionnement (22) du mécanisme de verrouillage, ce bras de levier (26) comportant une première extrémité reliée de manière pivotante au bouclier (42) et une deuxième extrémité reliée au moyen de traction (30).

8. Dispositif selon l'une quelconque des revendications précédentes, dans lequel le moyen de traction (30) comprend un premier élément de traction (32) pour verrouiller et relâcher le bouclier, et un deuxième élément de traction (34) pour déplacer le bouclier (42).

9. Déflecteur d'air (40), muni d'un dispositif selon l'une quelconque des revendications précédentes.
